(19) Europäisches Patentamt
European Patent Office
Office européen des brevets

(11) Veröffentlichungsnummer: **0 035 587**
B1

(12) # EUROPÄISCHE PATENTSCHRIFT

(45) Veröffentlichungstag der Patentschrift: **18.01.84**

(51) Int. Cl.³: **H 04 N 5/33**

(21) Anmeldenummer: **80102135.3**

(22) Anmeldetag: **21.04.80**

(54) Wärmebildgerät.

(30) Priorität: **06.03.80 CH 1765/80**

(43) Veröffentlichungstag der Anmeldung:
**16.09.81 Patentblatt 81/37**

(45) Bekanntmachung des Hinweises auf die Patenterteilung:
**18.01.84 Patentblatt 84/3**

(84) Benannte Vertragsstaaten:
**DE FR GB IT NL**

(56) Entgegenhaltungen:
FR - A - 2 374 803

INTERNATIONAL CONFERENCE ON CHARGE
COUPLED DEVICES, Conference 3. September
1976. Edinburgh, GB VANSTONE et al. "A time
delay and integration CCD for a serial scanned IR
imager", Seiten 315-325

(73) Patentinhaber: **SIEMENS-ALBIS
AKTIENGESELLSCHAFT
EGA1/Verträge und Patente Postfach
CH-8047 Zürich (CH)**

(72) Erfinder: **Tschannen, Gottfried
Seebahnstrasse 177/153
CH-8004 Zürich (CH)**
Erfinder: **Diamant, Robert
Diggelmannstrasse 22
CH-8047 Zürich (CH)**

Courier Press, Leamington Spa, England.

# 0 035 587

## Wärmebildgerät

Die vorliegende Erfindung betrifft ein Wärmebildgerät gemäss dem Oberbegriff des Patentanspruches 1.

Aus der FR—A 2374803 ist ein Wärmebildgerät bekannt, mit dessen Hilfe das Rauschen der Signale bezüglich eines Referenzbildes detektiert werden kann. In diesem Wärmebildgerät wird jeweils das Ausgangssignal eines Detektorelementes einerseits direkt dem Eingang einer Abtast- und Halteschaltung und andererseits über die Reihenschaltung eines Detektors, eines Speichers und eines UND-Tores dem Steuereingang der Abtast- und Halteschaltung zugeführt. Dieses Wärmebildgerät funktioniert in der Weise, dass, wenn das Rauschen eines Detektorelements einen vorbestimmten Wert erreicht, die Abtast- und Halteschaltung blockiert wird, die somit dann das zuletzt gespeicherte Signal nochmals weitergibt.

Ein solches Wärmebildgerät kann daher nur richtig arbeiten, wenn das Ausgangssignal ein und desselben Detektorelementes nicht ständig mit Rauschen behaftet ist. Zweck der vorliegenden Erfindung ist es nun, ein Wärmebildgerät zu schaffen, das auch bei einem ständigen Ausfall von einigen der auf einem Halbleitersubstrat integrierten Detektorelemente eines Detektors immer noch richtig funktioniert.

Dies wird erfindungsgemäss durch die im kennzeichnenden Teil des Anspruches 1 angegebenen Massnahmen erreicht.

Auf diese Weise gelingt es, Detektorelemente, beispielsweise Infrarot-Dioden, in relativ kleinen Abständen voneinander anzuordnen, wodurch die Empfindlichkeit des Wärmebildgerätes gegenüber einem Detektor mit diskreten Dioden merklich verbessert werden kann, ohne dass das ganze Halbleiter-Substrat ersetzt werden muss, wenn zwar eine Diode defekt ist, alle anderen Dioden jedoch richtig funktionieren.

Vorteilhafte Ausgestaltungen der Erfindung sind in weiteren abhängigen Ansprüchen angegeben.

Die Erfindung wird nachfolgend durch Beschreibung von Ausführungsbeispielen anhand von Zeichnungen näher erläutert. Es zeigt:

Fig. 1 das Blockschaltbild eines Wärmebildgerätes gemäss einer der erfindungsgemässen Ausführungsformen,

Fig. 2 das Schema der Wirkungsweise eines schwenkenden Spiegels, der Infrarot Strahlung aus einem Bildpunkt auf mehrere Detektorelemente reflektiert,

Fig. 3 das Blockschaltbild eines Summierers, bei dem die Signale aus den Detektorelementen jeweils nach einer unterschiedlich langen Verzögerung addiert werden,

Fig. 4 das Blockschaltbild eines erfindungsgemässen digitalen Summierers mit einer vorgeschalteten Torschaltung und einer nachgeschalteten Korrekturschaltung,

Fig. 5 das Blockschaltbild einer Ueberwachungsschaltung mit einem Mikroprozessor gemäss einer der erfindungsgemässen Ausführungsformen,

Fig. 6 das Blockschaltbild eines Fehlerdetektors einer Ueberwachungsschaltung gemäss einer weiteren erfindungsgemässen Ausführungsform,

Fig. 7 eine schematische Darstellung verschiedener Signale im Fehlerdetektor nach Fig. 6,

Fig. 8 das Blockschaltbild eines Integrators im Fehlerdetektor nach Fig. 6,

Fig. 9 eine schematische Darstellung verschiedener Signale im Integrator gemäss Fig. 8,

Fig. 10 eine schematische Darstellung der Arbeitsweise eines digitalen Spitzenwertdetektors im Integrator gemäss Fig. 8,

Fig. 11 das Blockschaltbild einer weiteren Ausführung eines Summierers nach Fig. 1.

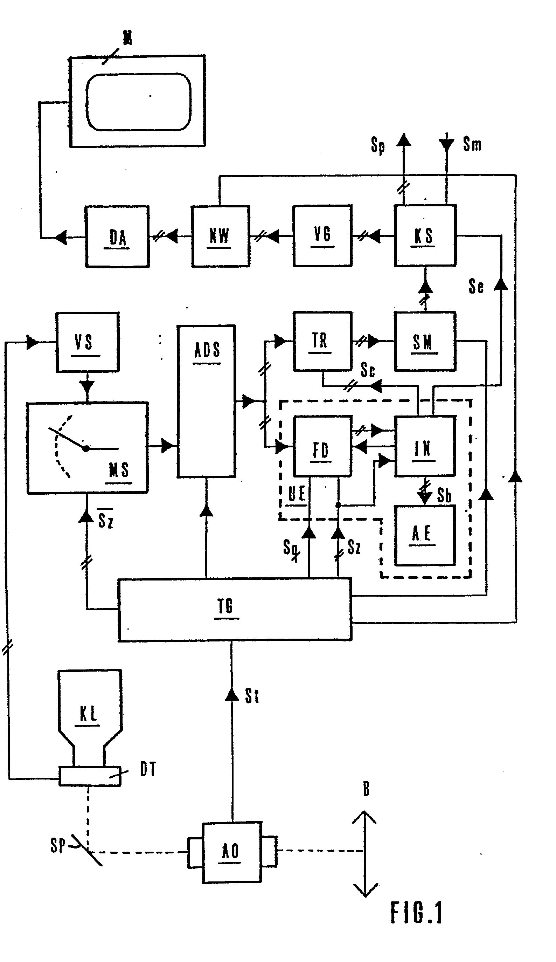

Das in Fig. 1 dargestellte Wärmebildgerät weist eine Abtastoptik AO auf, die die von einer Szene B herkommende Infrarot-Strahlung bildpunktweise abtastet und über einen Spiegel SP auf einen Detektor DT fokussiert. Eine bekannte Abtastoptik AO weist beispielsweise zwei schwenkende Spiegel oder einen schwenkenden Spiegel und ein rotierendes Polygonrad auf, deren Drehachsen senkrecht zueinander liegen. Selbstverständlich kann für dieses Wärmebildgerät auch eine Abtastoptik anderer Art verwendet werden.

Die Ausgangssignale des von einem Kühler KL gekühlten Detektors DT werden mit Hilfe von Bündelleitungen über die Reihenschaltung einer Verstärkerschaltung VS, einer Multiplexschaltung MS, einer Analog-/Digital-Wandlerschaltung ADS und einer Torschaltung TR dem Mehrfach-Eingang eines Summierers SM zugeführt, dessen Ausgangssignale mit Hilfe von Bündelleitungen über die Reihenschaltung einer Korrekturschaltung KS, einer Verzögerungsschaltung VG und eines Normwandlers NW an den Mehrfach-Eingang eines Digital-/Analog-Wandlers DA angeschlossen sind, mit dessen Ausgangssignal der Eingang eines Monitors M beaufschlagt ist. Ein von der Abtastoptik AO abgegebenes Steuersignal St wird dem Eingang eines Taktgebers TG mit sechs Ausgängen zugeführt, von denen zwei mit je einem Takteingang der Analog-/Digital-Wandlerschaltung ADS und des Summierers SM verbunden sind. Weitere vom Taktgeber TG abgegebene Signale sind eine Signal $\overline{Sz}$ für den Eingang der Multiplexschaltung MS sowie zwei Signale Sq und Sz, mit denen je ein Eingang einer Ueberwachungsschaltung UE beaufschlagt wird, deren erstes Ausgangssignal Sc einem zweiten Eingang der Torschaltung TR und deren zweites Ausgangssignal Se einem weiteren Eingang der Korrektur-

2

**O 035 587**

schaltung KS zugeführt wird. Ein zweiter Eingang der Ueberwachungsschaltung UE ist mit dem ersten Eingang der Torschaltung TR und der sechste ein Synchronisiersignal abgebende Ausgang des Taktgebers TG mit einem weiteren Eingang des Normwandlers NW verbunden. Dabei könnte das Synchronisiersignal ebensogut von Normwandler NW über den Taktgeber TG der Abtastoptik AO zugeführt werden.

Der Detektor DT weist eine empfindliche Detektorfläche von beispielsweise etwa $50 \times 50 \ \mu m^2$ auf, die von einer Dioden-Matrix gebildet ist, in der als Detektorelemente 55 auf Infrarot-Strahlung empfindliche Dioden in p Zeilen, z.B. p=11, zu je n Dioden, z.B. n=5, in Matrixform verteilt sind.

Die Verstärkerschaltung VS weist $p \cdot n$(z.B. $p \cdot n$=55) Verstärker auf, in denen die 55 Signale aus den 55 Dioden einzeln verstärkt werden. Die Multiplexschaltung MS besteht aus n=5 Multiplexern, die die Signale von je einer der p=11 Zeilen zeitlich verschachteln. Demzufolge weist die Analog-/Digital-Wandlerschaltung ADS ebenfalls n=5 Analog-/Digital-Wandler mit je m Einzel-Ausgängen für $2^m$ Stufenwerte auf. Somit besteht der erste Eingang der Torschaltung TR aus $m \cdot n$ (z.B. $m \cdot n$=20) Anschlüssen für n Signale (z.B. n=5) zu je m (z.B. m=4) Bit. Wenn beispielsweise die Abtastoptik AO 22 Streifen abtastet ergeben sich $22 \times 11$=242 Zeilen für das ganze Bild.

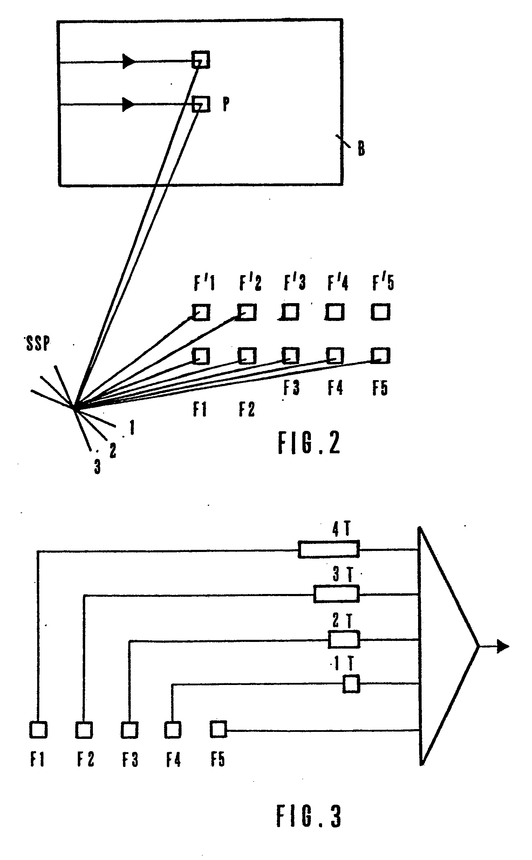

Die Arbeitsweise des Wärmebildgerätes nach Fig. 1 wird mit Hilfe der Figuren 2 bis 5 erklärt. Fig. 2, in der zur Vereinfachung der Detektor nur p=2 Zeilen mit je n=5 Dioden F1, F2,...F5; F'1, F'2,...F'5 aufweist, zeigt einen schwenken Spiegel SSP, der in der Position 3 das Licht aus einem Bildpunkt P im Zeitpunkt to auf die Diode F4 reflektiert. Dabei erhielten die Diode F3 im Zeitpunkt to-T, als der schwenkende Spiegel noch in der Position 2 war, und die Diode F2 im Zeitpunkt to-2T, als der schwenkende Spiegel noch in der Position 1 war, ebenfalls einen Lichtstrahl aus demselben, Bildpunkt P.

Um solche Verzögerungen zu kompensieren, werden die Diodensignale nachträglich derart unterschiedlich verzögert, dass sie ein und demselben Bildpunkt entsprechen. So werden im Summierer SM (Fig. 1) die Signale aus den Dioden F1, F2, F3 und F4 um die Zeiten 4T, 3T, 2T bzw. T verzögert (Fig. 3), bevor sie mit dem Signal aus der Diode F5 addiert werden. Dies setzt selbstverständlich voraus, dass die Aenderung der Lichtintensität des Bildpunktes P während der Zeit 4T vernachlässigbar klein ist.

Der Detektor DT im Wärmebildgerät nach Fig. 1 weist $p \cdot n$ Dioden auf, so dass ein Summierer gemäss Fig. 3 $p \cdot (n-1)$ Verzögerungsglieder aufweisen muss. Um unter anderem den mit den Verzögerungsgliedern verbundenen Aufwand zu reduzieren, ist das Wärmebildgerät mit der Multiplexschaltung MS und der Analog-/Digital-Wandlerschaltung ADS versehen, wodurch die Diodensignale zeilenmässig zeitlich verschachtelt und digitalisiert werden.

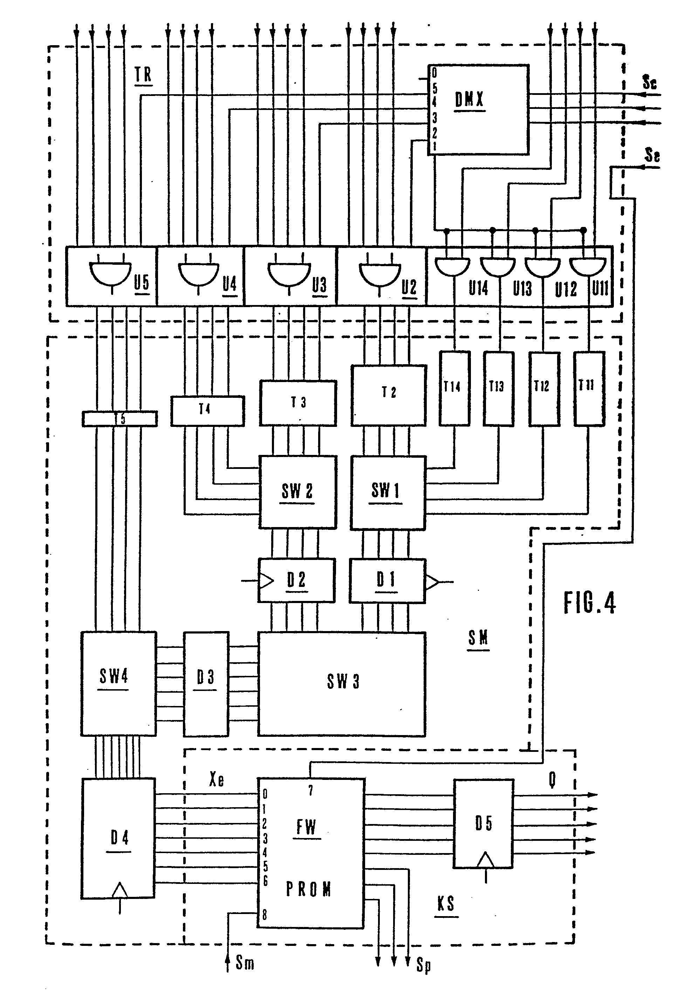

Fig. 4 zeigt den Aufbau der Torschaltung TR, des Summierers SM und der Korrekturschaltung KS gemäss Fig. 1. Die Torschaltung TR weist 20 UND-Tore Uij auf, von denen in Fig. 4 die UND-Tore U11, U12, U13, U14 einzeln und die restlichen UND-Tore blockweise als UND-Tore-Einheiten U2, U3, U4, U5 dargestellt sind. Diese UND-Tor-Einheiten U1 bis U5 werden von einem Demultiplexer DMX einzeln gesteuert. Die 20 Ausgangssignale der Analog-/Digital-Wandlerschaltung ADS (Fig. 1), die den 4-Bit-Signalen pro Diode bei 5 Dioden entsprechen, werden über je ein Tor Uij der Torschaltung TR dem Eingang je eines im Summierer SM enthaltenen Verzögerungsgliedes Tij zugeführt. In Fig. 4 sind die Verzögerungsglieder T11, T12, T13 und T14 einzeln und die restlichen Verzögerungsglieder Tij blockweise als Verzögerungseinheiten T2, T3, T4 und T5 dargestellt, wobei die vier Bit einer und derselben Einheit jeweils um eine gleiche Zeitdauer verzögert werden.

Danach werden die Ausgangssignale der Verzögerungsglieder T11, T12, T13, T14 (Fig. 4) und die vier Ausgangssignale der Verzögerungseinheit T2 in einem ersten Summierwerk SW1 und je vier Ausgangssignale der Verzögerungseinheiten T3 und T4 in einem zweiten Summierwerk SW2 addiert. Dabei werden die vier Ausgangssignale des Summierwerkes SW1 über eine Kippschaltungen aufweisende Synchronisierschaltung D1 und die vier Ausgangssignale des Summierwerkes SW2 über eine zweite Synchronisierschaltung D2 je einem Eingang eines weiteren Summierwerkes SW3 zugeführt, dessen sechs Ausgänge über eine dritte Synchronisierschaltung D3 mit je einem Eingang eines vierten Summierwerkes SW4 verbunden sind, in dem diese Eingangssignale mit den über die Verzögerungseinheit T5 geführten Signalen addiert werden. Das Summierwerk SW4 weist ein Ausgangssignal mit sieben Bit auf, das mit Hilfe einer vierten Synchronisierschaltung D4 synchronisiert wird. Die Verzögerungszeiten der Verzögerungseinheiten T1 bis T5 müssen derart gewählt werden, dass alle Signale am Eingang des Summierwerkes SW4 auch nach Berücksichtigung der Laufzeiten aller Zweige zeitlich übereinstimmen.

Das Wärmebildgerät nach Fig. 1 funktioniert im Idealfall, bei dem die Ueberwachungsschaltung ausgeschaltet sein kann, folgendermassen:

Die 55 Diodensignale aus dem Detektor DT werden einzeln in der Verstärkerschaltung VS verstärkt, in der Multiplexschaltung MS zeilenweise zeitlich verschachtelt und in der Analog-/Digital-Wandlerschaltung ADS codiert. Die codierten Signale gelangen unverändert über die Torschaltung TR in den Summierer SM (Fig. 4), in dem die jeweiligen Diodensignale einer Fünferreihe nach interschiedlicher reihenmässiger Verzögerung addiert werden. Das 7-Bit-Ausgangssignal Xe des Summierers SM gelangt sodann unverändert in einen in der Korrekturschaltung KS enthaltenen Festwertspeicher FW, in dem das 7-Bit-Eingangssignal in ein 5-Bit-Ausgangssignal umgewandelt und mit Hilfe einer fünften Synchronisierschaltung D5 synchronisiert wird. Das 5-Bit-Ausgangssignal Q der Korreckturschaltung

3

O 035 587

KS gelangt über die Verzögerungsschaltung VG in den Normwandler NW und wird im Digital-/Analog-Wandler DA umgewandelt und im Monitor M angezeigt. Allgemein kann Ausgangssignal Q eine aus r Bit bestehendes Signal sein.

Die Verzögerungsschaltung VG dient dazu, fertigungstechnisch bedingte Verschiebungen der Zeilen in der Matrixanordnung der Detektorelemente nach einem ähnlichen Verfahren, wie das in Fig. 3 angedeutete, zu kompensieren. Da diese Verzögerungsschaltung unabhängig vom Gegenstand der vorliegenden Erfindung ist, wird sie hier nicht näher beschrieben. Bei einer symmetrischen Matrixanordnung der Detektorelemente kann diese Verzögerungsschaltung VG entfallen.

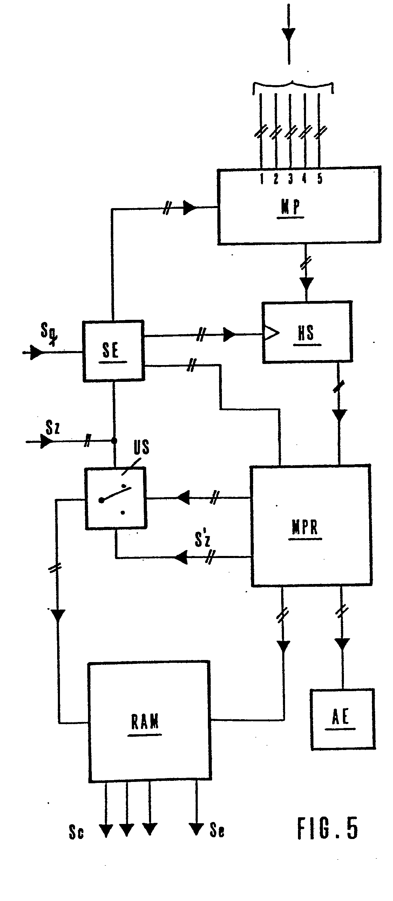

Die Ueberwachungsschaltung UE nach Fig. 5 weist einen Multiplexer MP mit n=5 Eingängen 1, 2, 3, 4, 5 zu je m Bit auf, welcher über eine m-Bit-Leitung mit dem Eingang eines Hilfsspeichers HS verbunden ist, dessen Ausgangssignale über eine m-Bit-Leitung dem ersten Eingang eines Mikroprozessors MPR zugeführt werden, dessen erster Ausgang über eine m'-Bit-Leitung an den ersten Eingang eines Festwertspeichers RAM angeschlossen ist, dessen Ausgangssignale Sc und Se zur Steuerung der Torschaltung TR bzw. der Korrekturschaltung KS dienen. Dabei liefert eine eingangsseitig mit den Ausgangssignalen Sq und Sz des Taktgebers TG (Fig. 1) beaufschlagte Steuereinheit SE Steuersignale für den Multiplexer MP und den Hilfsspeicher HS. Die Steuereinheit SE ist zudem mit dem Mikroprozessor MPR verbunden, welcher einen Umschalter US derart steuert, dass entweder eine Binärzählersignal Sz vom Taktgeber TG oder eine m-Bit-Multiplexer-Taktsignal S'z vom Mikroprozessor MPR einem weiteren Eingang des Festwertspeichers RAM zugeführt wird, um die Zeilenadressen anzusteuern.

Die Ueberwachungsschaltung nach Fig. 5 funktioniert folgendermassen:

Der Multiplexer MP wird von der Steuereinheit SE derart gesteuert, dass ein erstes Diodensignal, das auf die Abtastposition 1 des Multiplexers MP gelangt, bei dieser Position 1 bleibt, bis die Multiplexschaltung MS (Fig. 1) die 11 Zeilen beispielsweise viermal durchlaufen hat. Um die Auflösung zu erhöhen, wird nämlich das Bild, das einer Diodenfläche entspricht, zweimal abgetastet. Wenn daher der Abstand zwischen zwei Diodenflächen gleich gross wie die Breite der Dioden ist, müssen die 11 Zeilen während der Zeit T viermal durchlaufen werden. So wird der Signalwert einer ausgewählten Diode unter den 11 vorbestimmten Zeilen im Hilfsspeicher HS gespeichert und an den Mikroprozessor MPR weitergegeben. Dann schaltet die Steuereinheit SE den Multiplexer MP auf seine weiteren Eingänge 2, 3, 4, 5 um, die den weiteren Dioden der vorbestimmten Zeile entsprechen. Im Mikroprozessor MPR werden zunächst die Beträge der Differenzen

$$Diz = |aiz - \Sigma aiz/n| \quad i=1, \dots n$$

zwischen den Signalwerten ais aus den n (z.B. n=5) Dioden jeder Zeile und dem Mittelwert $\Sigma aiz/n$ dieser Signalwerte gebildet. Dann wird der Mittelwert Md dieser Beträge

$$Md = \Sigma \frac{Diz}{n}$$

mit einem Grenzfaktor k multipliziert, der beispielsweise in der Nähe von k=2 liegen kann, wobei auch andere Werte k>0 möglich sind.

Nachher werden die Differenzen Diz mit dem Wert k · Md verglichen, wobei die Dioden, für die

$$Diz < k \cdot Md$$

gilt, im Prinzip als gut und die Dioden, für die

$$Diz > k \cdot Md$$

gilt, im Prinzip als schlecht betrachtet werden. In gleicher Weise werden anschliessend die weiteren Dioden der Zeilen 2 bis 11 geprüft.

Der Mikroprozessor MPR wiederholt solche Vergleiche insgesamt N mal bis er endgültig entscheidet, ob eine Diode gut oder schlecht ist. Dabei wird die Position der defekten Diode innerhalb einer Reihe direkt und die Position der Reihe über den Umschalter US vom Mikroprozessor in den Hauptspeicher RAM eingespeichert, dessen Ausgangssignal Sc einerseits die Torschaltung TR steuert und andererseits die Korrekturschaltung KS von

$$K \cdot \sum_{1}^{n} Diz/n \text{ auf } K \cdot \sum_{1}^{n-1} Diz/(n-1)$$

umschaltet, worin z.B.

$$K = (2^n - 1)/(2^m - 1) = 31/15 \text{ ist.}$$

4

Die Ueberwachungsschaltung UE wird daher derart gesteuert, dass nur Signale aus den nach N Versuchen als gut befundenen Dioden von der Analog-/Digital-Wandlerschaltung ADS über die Torschaltung TR zum Mehrfach-Eingang des Summierers SM gelangen können, wobei dann die Korrekturschaltung KS das Resultat aus der Summierschaltung SM in Abhängigkeit der von der Ueberwachungsschaltung UE gelieferten Information über die Lage der defekten Dioden korrigiert.

In einer anderen Ausgestaltung der Erfindung kann die Ueberwachungsschaltung UE (Fig. 1) einen einem Fehlerdetektor FD nachgeschalteten Integrator IN aufweisen, an den eine Anzeigeeinheit AE angeschlossen ist. Dabei sind eingangsseitig der Fehlerdetektor FD und der Integrator IN gemeinsam mit dem Binärzählersignal Sz und der Integrator IN zusätzlich mit dem Taktsignal Sq des Taktgebers TG beaufschlagt.

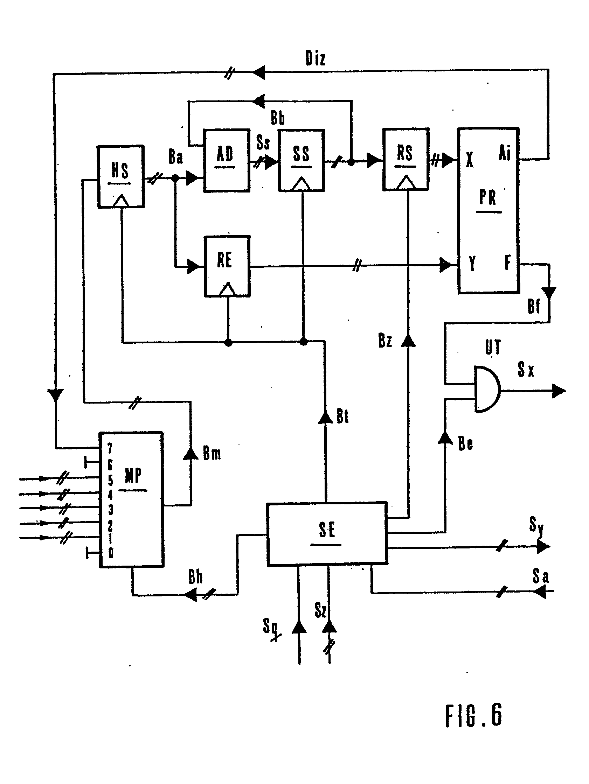

Der in Fig. 6 dargestellt Fehlerdetektor weist einen Multiplexer MP mit n=5 Eingängen 1, 2, 3, 4, 5 zu je m Bit auf, dessen Ausgangssignal Bm über eine m-Bit-Leitung zum Eingang eines Hilfsspeichers HS gelangt, dessen Ausgangssignal Ba über eine m-Bit-Leitung dem ersten Eingang eines Addierers AD und dem Signaleingang eines Registers RE zugeführt wird. Das Ausgangssignal Ss des Addierers AD gelangt mit Hilfe von (m+3)-Bit-Leitungen über einen Summierspeicher SS als Signal Bb einerseits zum zweiten Eingang des Addierers AD und andererseits zum Eingang eines Resultatspeichers RS, dessen (m+3)-Bit-Ausgangssignale den einen Bündeleingang X bildenden Eingängen eines programmierten Festwertspeichers PR zugeführt werden, dessen weitere einen Bündeleingang Y bildende Eingänge mit den m-Bit-Ausgangssignalen des Registers RE beaufschlagt sind. Die Bündeleingänge X, Y bilden zusammen die Adresseingänge des Festwertspeichers PR. Dabei liefert eine Steuereinheit SE ein gemeinsames Taktsignal Bt für den Hilfsspeicher HS, das Register RE und den Summierspeicher SS. Ausserdem liefert die Steuereinheit SE Taktsignale Bh und Bz für den Multiplexer MP bzw. den Resultatspeicher RS sowie ein Sperrsignal Be für den ersten Eingang eines UND-Tores UT, dessen Ausgangssignal Sx dem Dateneingang des Integrators IN zugeführt wird, wobei der zweite Eingang des UND-Tores UT mit dem ein Signal Bf abgebenden F-Ausgang des Festwertspeichers PR verbunden ist, dessen vom Ausgang Ai abgegebenes 3-Bit-Signal Diz dem siebten Eingang des Multiplexers MP zugeführt ist, dessen nullter und sechster Eingang auf einem Bezugspotential liegen.

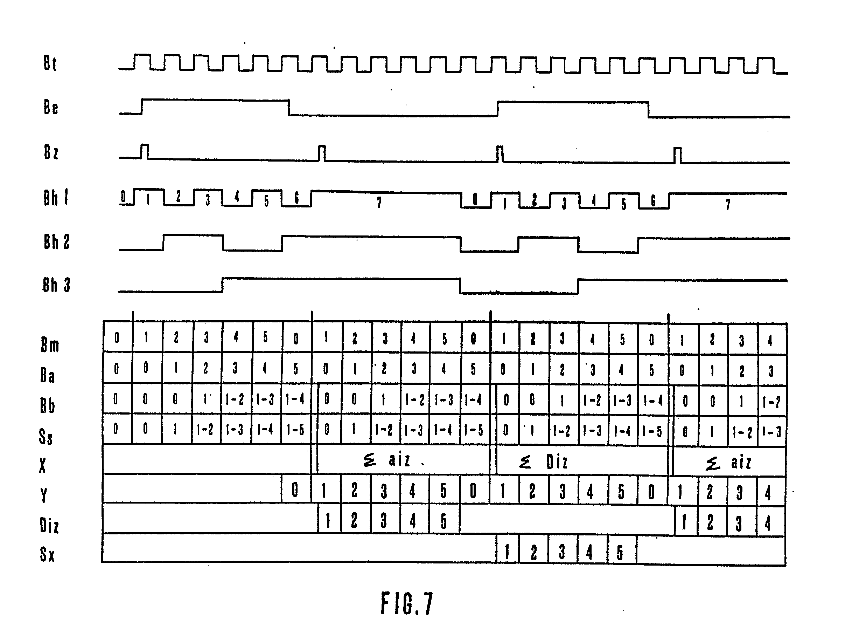

Fig. 7 zeigt die von der Steuereinheit SE erzeugten Steuersignale Bt, Be und Bz sowie die drei Komponenten Bh1, Bh2 und Bh3 des Signals Bh. Um die Figur 7 nicht unnötigerweise zu komplizieren, sind das Taktsignal Sq, aus dem das Taktsignal Bt durch Unterteilung gewonnen wird, und die Binärzählersignale Sz nicht angegeben. Die Signale Bm, Ba, Bb, Ss, X, Y, Diz und Sx sind in tabellarischer Form angegeben, wobei die Kästchenbreite dieser Tabelle der Periode des Taktsignals Bt entspricht. Die erste Sequenz 1, 2, 3, 4, 5, 0 des Signals Bm bezieht sich auf die Signale der Dioden 1 bis 5 (Abtaststellungen 1 bis 6 des Multiplexers MP) und die zweite Sequenz 1, 2, 3, 4, 5, 0 auf das Betragssignal Diz (Abtaststellung 7 des Multiplexers MP). Das Signal Ba ist durch den Hilfsspeicher HS um ein Kästchen gegenüber dem Signal Bm verschoben. Das Signal Bb ist nicht nur durch den Summierspeicher SS um ein Kästchen gegenüber dem Signal Ba verschoben, sonderen es gibt auch die Summen der Fehlersignale 1 und 2, 1 bis 3 bzw. 1 bis 4 an. Das Signal Ss gibt die Summe der Signale Ba und Bb an. Das Signal X entspricht den jeweils über fünf Perioden alternierenden Summerwerten $\Sigma aiz$ bzw. $\Sigma Diz$.

Der Fehlerdetektor FD nach Fig. 6 funktioniert folgendermassen: Am Anfang einer ersten Phase der Signalverarbeitung ist der zweite, rückgekoppelte Eingang des Addierers AD mit einem Signal "00 ... 0" (Anzahl Bit>m+1d(n−1)) beaufschlagt und der Multiplexer MP von der Steuereinheit SE derart gesteuert, dass die m Ausgangssignale des Multiplexers MP ebenfalls "00 ... 0" sind (vgl. 1. Spalte, Fig. 7). Dann gelangt ein erstes Diodensignal auf die Abtastposition 1 des Multiplexers MP und bleibt auf dieser Position 1, bis die Multiplexschaltung MS (Fig. 1) die 11 Zeilen beispielsweise viermal durchlaufen hat. Dabei werden die Signalwerte einer ausgewählten Diode in einer unter den 11 Zeilen vorbestimmten Zeile im Hilfsspeicher HS gespeichert. Ein beispielsweise der Diode D1 entsprechendes Signal al der vorbestimmten Zeile gelangt somit auf den ersten Eingang des Addierers AD, der dieses Signal mit dem Signal "00 ... 0" aus dem Summierspeicher SS addiert, d.h. dass dieses Signal unverändert durch den Addierer AD gelangt, im Summierspeicher SS gespeichert und auf den zweiten Eingang des Addierers AD zurückgekoppelt wird. Nachdem die Multiplexschaltung MS (Fig. 1) die 11 Zeilen viermal durchlaufen hat, tastet der Multiplexer MP die weiteren Eingänge 2, 3, 4, 5 ab, die den weiteren Dioden der vorbestimmten Zeile entsprechen, wobei im Addierer AD jeweils bei einem nächsten (i+1)-Takt zum jeweiligen Summenwert $a1z+a2z+ ... aiz$ nächster Wert $a(i+1)z$ addiert wird. Dieser Vorgang setzt sich in analoger Weise fort, bis am Ausgang des Addierers AD das Summensignal $\Sigma aiz$ erhalten wird, wobei das Ausgangssignal des Hilfsspeichers HS ausserdem zum Eingang des als m-Bit-Schieberegister arbeitenden Registers RE gelangt.

Während einer zweiten Phase der Signalverarbeitung wird zunächst das Summensignal $a1z+a2z+ ... +a5z$ während fünf Taktzeiten im Resultatspeicher RS gespeichert (vgl. Signal $X=\Sigma aiz$ in Fig. 7). Dabei wird der Eingang Y des Festwertspeichers PR (Fig. 6) jeweils mit einem im Register RE verzögerten Ausgangssignal aiz beaufschlagt. Dadurch gelangt das Signal a1z gleichen Zeitpunkt auf den Eingang Y wie das Signal $\Sigma aiz$ auf den Eingang X des Festwertspeichers PR, indem zunächst der Betrag $Diz=|\Sigma aiz/5−a1z|$ und anschliessend nacheinander die Beträge $Diz=|\Sigma aiz/5−aiz|$ mit i=2, 3, 4, 5 gebildet werden, wodurch die zweite Phase der Signalverarbeitung beendet wird. Zudem übernimmt

5

der Multiplexer MP über seinen Eingang 7 diese Betragssignale Diz, wobei im Addierer AD ähnlich wie in der ersten Phase jeweils ein neuer Betrag hinzuaddiert wird. Am Ende dieser zweiten Phase erscheint am Eingang X des Festwertspeichers PR ein Signal mit dem Betrag $\Sigma$Diz (i=1, 2, ... 5). Diese zwei Phasen des Vorganges unterscheiden sich nur darin, dass am Ende der ersten Phase die Summe der Signalwerte aiz und am Ende der zweiten Phase die Summe der Beträge erhalten wird.

Dies kann anhand von Fig. 7 veranschaulicht werden. Dabei geben die Ausgänge Ai und F des Festwertspeichers PR die Signale Diz und Bf bzw. Sx ab. Bei Beginn der zweiten Sequenz liegen am Eingang X eine Summensignal X=$\Sigma$aiz und am Eingang Y die Diodensignale 1 bis 5 vor. Das Signal Diz wird wieder über den Eingang 7 des Multiplexers eingelesen, worauf die Auswertung der Differenzen erfolgt, aus denen sich über das Tor UT während einer dritten Phase das Fehlersignal Sx ergibt. Die Signale, die den Leerstellen in der Tabelle von Fig. 7 entsprechen, sind nicht relevant und sind daher nicht angegeben.

Die dritte Phase läuft gleichzeitig mit der ersten Phase der nächstfolgenden Zeile. Aus den berechneten einzelnen Beträgen Diz und dem Summensignal $\Sigma$Diz untersucht der Festwertspeicher PR während dieser Phase, ob die jeweilige Ungleichung

$$Diz < k \cdot \Sigma Diz/n \quad i=1 \dots n$$

erfüllt wird, d.h. ob die entsprechende Diode der betreffenden Zeile gut ist. Wenn dies der Fall ist, gibt er an seinem F-Ausgang ein "0"-Signal und andernfalls ein "1"-signal ab.

Der gleiche Prozess wird nun zyklisch für die weiteren Zeilen durchgeführt, wobei die Multiplexschaltung MS (Fig. 1) ständig Abtastwerte übernimmt, von denen der Hilfsspeicher HS aufgrund seines Steuertaktes nur diejenigen weitergibt, die der vorbestimmten Zeile entsprechen. Man erhält somit die Diodensignal D1,1; ... D5,1; D1,2; ... D5,2; D1,11; ... D5,11; die nacheinander vom Ausgang des Fehlerdetektors FD (Fig. 1) zum Eingang des Integrators IN gelangen.

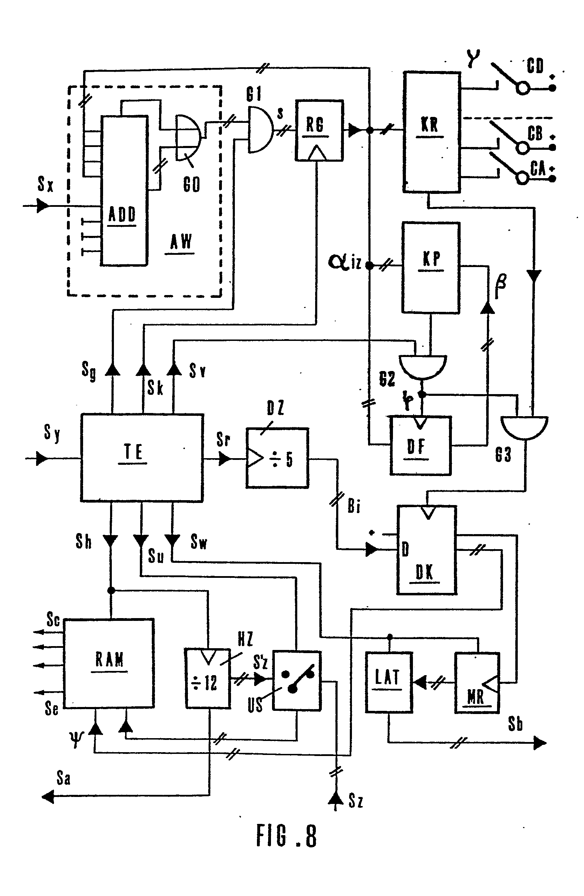

Der in Fig. 8 dargestellte Integrator IN weist ein eingangsseitig mit dem Ausgangssignal Sx des Fehlerdetektors FD beaufschlagtes Addierwerk AW auf, dessen m"-Bit-Ausgangssignal über eine m" Tore aufweisende Torschaltung G1 dem Eingang einer Registerschaltung RG mit m Kippschaltungen zugeführt wird, deren Takteingänge mit einem Taktsignal Sk aus einer Takteinrichtung TE beaufschlagt sind, die eingangsseitig über Bündelleitungen das Ausgangssignal Sy der Steuereinheit SE (Fig. 6) empfängt. Die Zahl m" hängt von der Anzahl der integrierten Fehlerwerte ab; z.B. kann bei 32 Integrationen m"≤5 sein. Dabei werden die m" Tore der Torschaltung G1 gemeinsam mit Hilfe eines von der Takteinrichtung TE abgegebenen Steuersignals Sg gesteuert. Die m"-Bit-Ausgangssignale $\alpha$iz der Registerschaltung RG werden über Bündelleitungen einem zweiten Eingang des Addierwerkes AW und je einem Eingang eines ersten Komparators KR, eines zweiten Komparators KP und eines Pufferspeichers DF zugeführt. Dabei ist im Addierwerk AW ein Addierer ADD, in dem die Signale Sx und $\alpha$iz addiert werden, und eine Anzahl m" ODER-Tore GO vorhanden, deren erste Eingänge mit je einem Bitsignal des Additionsresultates des Addierers ADD und deren zweite Eingänge gemeinsam mit dem Additionsübertragssignal des Addierers ADD beaufschlagt sind. Der Komparator KR weist eine Anzahl m" weiterer Eingänge auf, die über je einen von q Schaltern CA, CB ... CD an ein Bezugspotential angeschlossen werden können, mit dessen Hilfe eine Grenzwert-Eingabe Y möglich ist. Der ein Signal $\beta$ abgebende m"-Bit-Ausgang des Pufferspeichers DF ist mit dem zweiten m"-Bit-Eingang des Komparators KP verbunden, dessen 1-Bit-Ausgangssignal mit einem weiteren Steuersignal Sv aus der Takteinrichtung TE in einem UND-Tor G2 verknüpft wird, dessen Ausgangssignal $\varphi$ dem Takteingang des Pufferspeichers DF und dem ersten Eingang eines weiteren UND-Tores G3 zugeführt ist, welches das Signal $\varphi$ mit dem 1-Bit-Ausgangssignal des Komparators KR verknüpft. Der Ausgang des UND-Tores G3 ist mit den Takteingängen einer Anzahl n' parallelgeschalteter Kippstufen verbunden, die in einem weiteren Hilfsspeicher DK vorhanden sind, wobei für die Zahl n' die Beziehung n'≥(1dn)+1 gilt. Der Eingang einer dieser Kippstufen ist an eine Referenzspannungsquelle angeschlossen; die restlichen (n'−1) Kippstufen sind mit entsprechenden Ausgängen eines Diodenzählers DZ verbunden, der eingangsseitig eine weiteres Taktsignal Sr aus der Takteinrichtung TE erhält. Das n'-Bit-Ausgangssignal dieses Hilfsspeichers DK, der die Lagenummer der defekten Diode speichert, wird einem ersten Eingang eines Hauptspeichers RAM zugeführt, dessen zweiter Eingang mit Hilfe eines Umschalters US entweder mit dem Binärzählsignal Sz aus dem Taktgeber TG oder mit dem Ausgangssignal S'z eines Zeilenzählers HZ beaufschlagt, wird. Die Takteinrichtung TE gibt weitere Signale Sh, Su und Sw ab, wobei das Signal Sh einem weiteren Eingang des Hauptspeichers RAM und dem Takteingang des Zeilenzählers HZ, das Signal Su dem Takteingang des Umschalters US und das Signal Sw dem Takteingang eines Zwischenspeichers LAT und dem Steuereingang eines Zählers MR zugeführt wird, dessen Ausgänge mit den D-Eingängen je einer im Zwischenspeicher LAT enthaltenen Kippstufe verbunden sind. Die Eingänge der Anzeigeeinheit AE sind mit dem Ausgangssignal Sb dieser Kippstufen beaufschlagt.

Der Integrator IN nach Fig. 8 funktioniert folgendermassen: Die Fehlersignale Sx einer Diode am Eingang des Integrators IN gelangen über das Addierwerk AW, in dem die Signale Sx mit den rückgekoppelten Signalen $\alpha$iz addiert werden, und über die von der Takteinrichtung TE gesteuerte Torschaltung G1 in die Registerschaltung RG, in die vorher ein Signal "00 ... 0" eingetragen wurde. Der ganze Vorgang wiederholt sich weitere N−1=31 mal, wodurch jede Diode über ein ganzes Infrarotbild N=32 mal geprüft wird. Das Ausgangssignal des Addierwerkes AW wird in die 64-Bit-Registerschaltung RG eingegeben, In die die addierten Fehlermeldungssignale von 55 Dioden und nachträglich beispielsweise neun weitere "00 . . . 0"-Impulse eingeschlossen werden, um eine Höchstzahl von 64 Takten zu vervollständigen. Durch die 32-malige Addition der den Diodenwerten entsprechenden Fehlersignale wird die Integration vollzogen. Nach dieser Integration beginnt eine Vergleichsphase, bei der nun die Integrationssignale $\alpha iz$ der Registerschaltung RG im Komparator KP mit dem Ausgangssignal $\beta$ des Pufferspeichers DF verglichen werden. Dabei liegen die Werte der Signale $\alpha iz$ zwischen 0 und $2^q-1$. Während dieser Vergleichsphase ist die Torschaltung G1 gesperrt, so dass während dieser Zeit "00 . . . 0"-Werte von der Torschaltung G1 eingelesen werden.

Wenn $\alpha iz > \beta$ ist, wird über das UND-Tor G2 der Pufferspeicher DF derart gesteuert, dass $\beta = \alpha iz$ wird und in einem nächsten Schritt wird ein neuer $\alpha(i+1)$ z-Wert mit diesem alten $\alpha iz$-Wert verglichen. Wenn aber $\alpha iz \leq \beta$ ist, bleibt jeweils das vorhandene Ausgangssignal $\beta$ des Pufferspeichers DF für einen weiteren Takt bestehen. Der Pufferspeicher DF, das Tor G2 und der Komparator KP bilden somit einen digitalen Spitzenwert-Detektor, wobei das Ausgangssignal $\varphi$ des Tores G2 angibt, ob das Signal $\alpha iz > (i-1)z$ ist.

Das Signal $\alpha iz$ wird ausserdem in Komparator KR mit einem einstellbaren Grenzwertsignal $\gamma$ verglichen, das beispielsweise mit Hilfe der q Schalter CA, CB, . . . CD eingegeben werden kann, so dass die entsprechenden Grenzwerte zwischen 0 und $2^q-1$ eingestellt werden können. Wenn der Eingangswert $\alpha iz$ grösser ist als der vorgewählte Grenzwert $\gamma$, erscheint jeweils am Ausgang des Komparators KR ein Signal "1", das das Tor G3 öffnet, wodurch das Signal $\varphi$ zum Takteingang des Hilfsspeichers DK als Taktsignal gelangt, mit dem der Zählerstand des Diodenzählers DZ vom Hilfsspeicher DK übernommen wird. Der Diodenzähler DZ zählt fortlaufend von 1 bis 5 und wird nachher periodisch zurückgestellt. Damit ist feststellbar, welche der fünf Dioden einer Zeile defekt ist. Dabei wird jedesmal, wenn der $\alpha iz$-Wert die Grenze $\gamma$ überschritten hat, der Zählerstand am Diodenzähler in den Hauptspeicher RAM übernommen, sofern er grösser als $\beta$ ist, wodurch sichergestellt ist, dass am Schluss nur die Informationen über die schlechteste Diode mit dem höchsten Fehler eingespeichert bleibt. Grundsätzlich werden daher jeweils nur Informationen einer einzigen defekten Diode pro Zeile gespeichert.

Die Information über die Zeilennummer gelangt über den Zeilenzähler HZ und den Umschalter US zum Eingang des Hauptspeichers RAM. Der Umschalter US wird für diese Vergleichsphase nach der Integration von N=32 Werten umgeschaltet, so dass der Zeilenzähler HZ dem Hauptspeicher RAM die Adresse desjenigen Speicherplatzes übergibt, in den die aus dem Hilfsspeicher DK ausgelesene Diodennummer eingespeichert werden soll. Die Diodennummer wird durch das n'-Bit-Signal $\psi$ ermittelt. Wenn in einer Zeile keine Diode Schlecht ist, ist $\psi = 0$. Mit dieser Information über die Zeilen- und Spaltennummer ist die Lage der defekten Diode genau definiert, so dass das Ausgangssignal dieser defekten Diode mit Hilfe der Torschaltung TR (Fig. 1) ausgeblendet wird.

Während der Vergleichsphase wird von der Takteinrichtung TE ein Steuersignal Sg="0" abgegeben, wodurch die Tore der Torschaltung G1 gesperrt sind, so dass der Eingang der Registerschaltung RG ein Signal "00 . . . 0" erhält. Beim nächsten Infrarothalbbild ist nun das Ausgangssignal der Registerschaltung RG ein "00 . . . 0"-Signal und die Prüfung kann von vorne beginnen. Zugleich wird der Umschalter US zurückgeschaltet und die Information im Hauptspeicher RAM kann ausgelesen und an die Korrekturschaltung KS (Fig. 1) abgegeben werden. Dafür steuern die Ausgangssignale des Integrators IN die Torschaltung TR und schalten zur selben Zeit die Korrekturschaltung KS von

$$K \cdot \sum_{1}^{n} Diz/n \text{ auf } K \cdot \sum_{1}^{n-1} Diz/(n-1)$$

um, worin K zusätzlich eine Funktion des Steuersignals Sm des Festwertspeichers FW (Fig. 4) sein kann.

Die Korrekturschaltung KS nach Fig. 4 funktioniert folgendermassen:
Das 7-Bit-Eingangssignal des Festwertspeichers FW sei

$$Xe = A0 \cdot 2^0 + A1 \cdot 2^1 + A2 \cdot A^2 + \ldots A6 \cdot 2^6$$

Der Festwertspeicher FW transformiert dieses Signal Xe in ein 5-Bit-Ausgangssignal Q, das in Abhängigkeit der angelegten Steuersignale Se und Sm vier verschiedene Formen Qa, Qb, Qc und Qd annehmen kann. Das Signal Q hat die Form

$$Q = B0 \cdot 2^0 + B1 \cdot 2^1 + B2 \cdot 2^2 + B3 \cdot 2^3 + B4 \cdot 2^4$$

In der nachstehenden Tabelle I sind die Werte von Qa, Qb, Qc und Qd in Funktion von Xe angegeben, wobei Qa ein unkorrigiertes unmodifiziertes, Qb eine korrigiertes unmodifiziertes, Qc ein unkorrigiertes modifiziertes und Qd ein korrigiertes modifiziertes Signal ist. In der Tabelle sind nur die Werte Xe von 1 bis 75 angegeben; die restlichen Werte bis 127 werden nicht benützt. Dabei ist als eine weitere Ausführungsmöglichkeit die Tabelle derart berechnet worden, dass die Tore Uij in der

7

Torschaltung TR invertierende UND-Tore sind, wodurch bei einer defekten Diode die invertierenden UND-Toreinheiten einen Binärwert "15" abgeben.

Mit Hilfe des Steuersignals Sm können die unmodifizierten Ausgangssignale Qa oder Qb beispielsweise über einen von Hand betätigten Schalter auf die modifizierten Ausgangssignale Qc bzw. Qd umgeschaltet werden. Durch diese modifizierten Ausgangssignale Qc und Qd kann eine zusätzliche Verbesserung des Bildes bewirkt werden, indem den schwachen Signalen mehr Gewicht gegeben wird.

Das Steuersignal Se bewirkt hingegen ein Umschalten der unkorrigierten Ausgangssignale Qa oder Qc auf die korrigierten Ausgangssignale Qb bzw. Qd. Dabei braucht das Steuersignal Se nur eine Information über das Vorhandensein einer defekten Diode in einer Reihe zu enthalten, und zwar unabhängig von der Lage der defekten Diode innerhalb dieser Reihe, da die Informationen über die guten Dioden sowieso im Summierer SM addiert werden.

TABELLE I

| Xe | Qa | Qb | Qc | Qd | Xe | Qa | Qb | Qc | Qd | Xe | Qa | Qb | Qc | Qd |
|---|---|---|---|---|---|---|---|---|---|---|---|---|---|---|
| 1 | 0 | 0 | 1 | 0 | 26 | 11 | 6 | 17 | 12 | 51 | 21 | 18 | 25 | 23 |
| 2 | 1 | 0 | 2 | 0 | 27 | 11 | 6 | 18 | 13 | 52 | 21 | 19 | 25 | 24 |
| 3 | 1 | 0 | 3 | 0 | 28 | 12 | 7 | 18 | 13 | 53 | 22 | 20 | 26 | 24 |
| 4 | 2 | 0 | 4 | 0 | 29 | 12 | 7 | 18 | 14 | 54 | 22 | 20 | 26 | 24 |
| 5 | 2 | 0 | 5 | 0 | 30 | 12 | 8 | 19 | 14 | 55 | 23 | 21 | 26 | 25 |
| 6 | 2 | 0 | 6 | 0 | 31 | 13 | 8 | 19 | 15 | 56 | 23 | 21 | 26 | 25 |
| 7 | 3 | 0 | 7 | 0 | 32 | 13 | 9 | 19 | 15 | 57 | 23 | 22 | 27 | 25 |
| 8 | 3 | 0 | 8 | 0 | 33 | 14 | 9 | 20 | 16 | 58 | 24 | 22 | 27 | 26 |
| 9 | 4 | 0 | 9 | 0 | 34 | 14 | 10 | 20 | 16 | 59 | 24 | 23 | 27 | 26 |
| 10 | 4 | 0 | 10 | 0 | 35 | 14 | 10 | 20 | 17 | 60 | 25 | 23 | 27 | 26 |
| 11 | 5 | 0 | 10 | 0 | 36 | 15 | 11 | 21 | 17 | 61 | 25 | 24 | 28 | 27 |
| 12 | 5 | 0 | 11 | 0 | 37 | 15 | 11 | 21 | 18 | 62 | 25 | 24 | 28 | 27 |
| 13 | 5 | 0 | 11 | 0 | 38 | 16 | 12 | 21 | 18 | 63 | 26 | 25 | 28 | 27 |
| 14 | 6 | 0 | 12 | 0 | 39 | 16 | 12 | 22 | 19 | 64 | 26 | 25 | 28 | 28 |
| 15 | 6 | 0 | 13 | 0 | 40 | 16 | 13 | 22 | 19 | 65 | 27 | 26 | 28 | 28 |
| 16 | 7 | 1 | 13 | 1 | 41 | 17 | 13 | 22 | 20 | 66 | 27 | 26 | 29 | 28 |
| 17 | 7 | 1 | 14 | 3 | 42 | 17 | 14 | 23 | 20 | 67 | 28 | 27 | 29 | 28 |
| 18 | 7 | 2 | 14 | 4 | 43 | 18 | 14 | 23 | 20 | 68 | 28 | 27 | 29 | 29 |
| 19 | 8 | 2 | 14 | 6 | 44 | 18 | 15 | 23 | 21 | 69 | 28 | 28 | 29 | 29 |
| 20 | 8 | 3 | 15 | 7 | 45 | 18 | 15 | 23 | 21 | 70 | 29 | 28 | 30 | 29 |
| 21 | 9 | 3 | 15 | 8 | 46 | 19 | 16 | 24 | 22 | 71 | 29 | 29 | 30 | 30 |
| 22 | 9 | 4 | 16 | 9 | 47 | 19 | 16 | 24 | 22 | 72 | 30 | 29 | 30 | 30 |
| 23 | 9 | 4 | 16 | 10 | 48 | 20 | 17 | 24 | 22 | 73 | 30 | 30 | 30 | 30 |
| 24 | 10 | 5 | 17 | 10 | 49 | 20 | 17 | 25 | 23 | 74 | 30 | 30 | 30 | 30 |
| 25 | 10 | 5 | 17 | 11 | 50 | 21 | 18 | 25 | 23 | 75 | 31 | 31 | 31 | 31 |

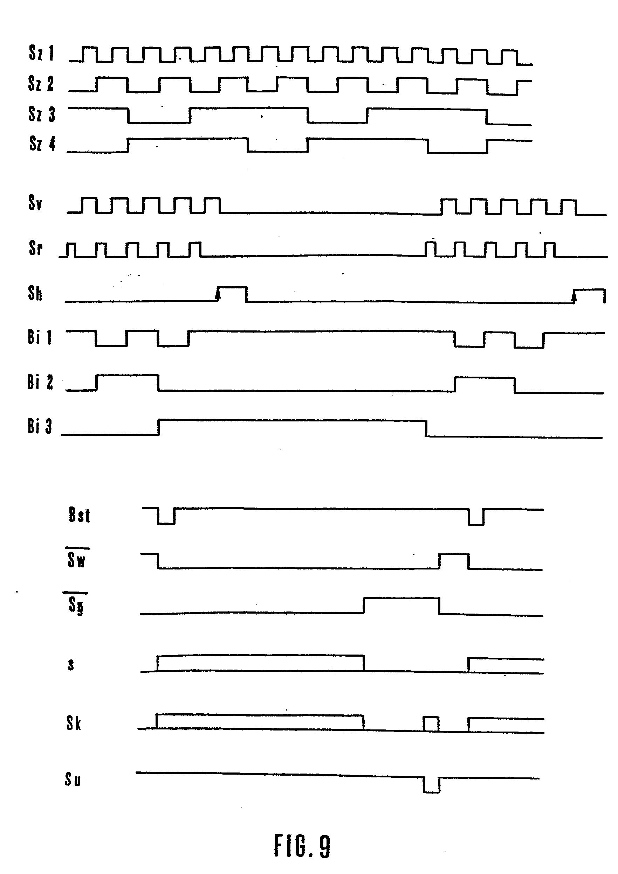

In Fig. 9 sind die drei das Bündelsignal Sz bildenden Signale Sz1, Sz2, Sz3, sowie in anderen Massstäben die langsameren Signale Sv, Sr, Sh, Di1, Di2, Di3 und die noch langsameren Signale Bst, $\overline{Sw}$, $\overline{Sg}$, s, Sk und Su dargestellt. Die Signale Sv und Sr bestehen aus Paketen von je t Impulsen, die von etwas längeren Pausen gefolgt sind, wobei die Impulse Sr schmaler als die Impulse Sv sind und jeweils etwas früher ankommen. Das Signal Sh besteht aus einzelnen Impulsen, die jeweils mit der Endflanke des letzten Impulses eines Paketes Sv beginnen. Die Signale Bi1, Bi2, Bi3 bilden das Ausgangsbündelsignal Bi des Diodenzählers Dz in Fig. 8.

Die Signale $\overline{Sw}$ und $\overline{Sg}$ bestehen aus einzelnen Impulsen, die jeweils von längeren Pausen gefolgt sind, wobei die Anstiegflanke des Impulses $\overline{Sw}$ mit der Rückflanke des Impulses $\overline{Sg}$ übereinstimmt. Das Signal s ist aus schnellen sich ständig ändernden Impulsen nach Massgabe der ankommenden Fehlersignale gebildet. Das Signal Sk besteht aus einer Sequenz eines Paketes von $32 \times 64$ Impulsen, das der Integrationsphase entspricht, einer Pause, einem einzelnen Paket von 64 Impulsen und einer Pause. Dieses Paket von 64 Impulsen stimmt mit dem Signal Su überein, das der Schreibphase des Hauptspeichers RAM entspricht. In Fig. 9 ist auch ein zusätzlicher in den Figuren 1, 6 und 8 nicht angegebener Bildstartimpuls Bst dargestellt, der zum Starten der Steuereinheit SE in Fig. 6 und der Takteinrichtung TE in Fig. 8 dient.

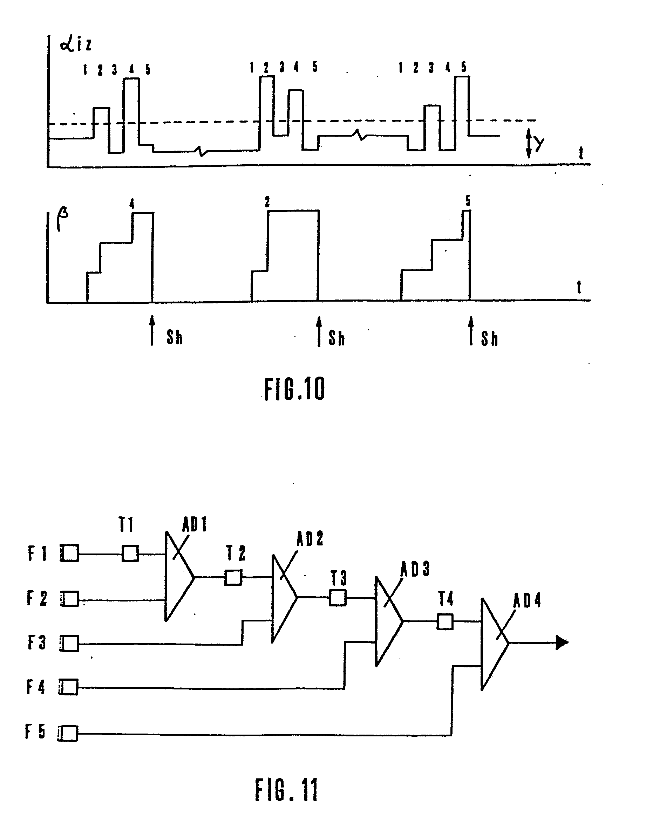

Fig. 10 veranschaulicht drei Beispiele, wie die Signale $\alpha iz$ und $\beta$, die vom Komparator verglichen werden, aussehen können. Im ersten Beispiel ist die Diode 4, im zweiten die Diode 2 und im dritten Beispiel die Diode 5 die schlechteste.

Der in Fig. 11 dargestellte Summierer SM weist drei Reihenschaltungen von jeweils einem Verzögerungsglied T1, T2, T3 und dem ersten Eingang eines Addierers AD1, AD2 bzw. AD3 auf, wobei einerseits das Detektorelement F1 über diese drei Reihenschaltungen und über ein viertes Verzögerungsglied T4 mit dem ersten Eingang eines vierten Addierers AD4 verbunden und andererseits jeder zweite Eingang der Addierer AD1, AD2, AD3 und AD4 an je einem der weiteren Detektorelemente F2, F3, F4, F5 angeschlossen ist. In dieser Ausführung sind alle Verzögerungsglieder identisch, d.h. es gilt T1=T2=T3=T4.

**Patentansprüche**

1. Warmebildgerät mit einer Abtastoptik (AO) und einem zumindest angenähert in Zeilen und Reihen angeordnete Detektorelemente aufweisenden Detektor (DT) und mit mindestens einem Summierer (SM) sowie einer Torschaltung (TR) und mit einer Ueberwachungsschaltung (UE), die die Werte der von den Detektorelementen abgegebenen Signale überprüft und mindestens einen möglichen falschen Wert eines Signals aus einem defekten Detektorelement erkennt, woraufhin die zugeordneten Tore der Torschaltung (TR) gesperrt werden, um die falschen Detektorelementsignale zu eliminieren, dadurch gekennzeichnet, dass der Summierer (SM) mehrere Verzögerungsglieder aufweist, um ein Ausgangssignal der Form S1 (t)+S2 (t—T1)+S3 (t—T2)+ . . . abzugeben, dass die Torschaltung (TR) zwischen den detektorelementen des Detektors (DT) und den Eingängen des Summierers (SM) eingefügt ist, und dass zwischen dem Summierer (SM) und einer nachgeschalteten Auswerteeinrichtung (VG, NW, DA, M) eine Korrekturschaltung (KS) eingefügt ist, die das Resultat des Summierers (SM) in Abhängigkeit der von der Ueberwachungsschaltung (UE) gelieferten Information über die defekten Detektorelemente korrigiert.

2. Wärmebildgerät nach Anspruch 1, dadurch gekennzeichnet, dass zwischen dem Detektor (DT) und dem Summierer (SM) eine Multiplexschaltung (MS) und eine Analog-/Digital-Wandlerschaltung (ADS) eingefügt sind, mit deren Hilfe die Detektorsignale zeitlich verschachtelt bzw. codiert werden.

3. Wärmebildgerät nach Anspruch 1 oder 2, dadurch gekennzeichnet, dass die Korrekturschaltung (KS) derart durch den Summierer (SM) oder einen ihm nachgeschalteten Verstärker ausgebildet ist, dass die Verstärkung des Summierers (SM) oder des ihm nachgeschalteten Verstärkers zumindest angenähert um einen Faktor n/(n—n") vergrössert wird, worin n" die Anzahl der falschen und n die totale Anzahl der dem Summierer zugeordneten Detektorelementsignale ist.

4. Wärmebildgerät nach Anspruch 1 oder 2, dadurch gekennzeichnet, dass di Korrekturschaltung (KS) derart durch den Summierer (SM) oder einen ihm nachgeschalteten Verstärker ausgebildet ist, dass der mit einem defekten Detektorelement verbundene Eingang eines im Summierer (SM) enthaltenen Addierwerkes abgetrennt und mit dem Kanal eines benachbarten richtig funktionierenden Detektorelementes parallelgeschaltet wird.

5. Wärmebildgerät nach einem der Ansprüche 1 bis 4, dadurch gekennzeichnet, dass die Ueberwachungsschaltung (UE) einen Fehlerdetektor (FD) aufweist, in dem zunächst die Beträge der Differenzen

$$Diz=|aiz—\Sigma aiz/n| \quad i=1, 2, . . . n$$

zwischen den Signalwerten aiz aus den n Detektorelementen jeder Zeile und dem Mittelwert dieser Signalwerte gebildet werden, wobei dann der Mittelwert Md dieser Beträge

$$Md=\Sigma Diz/n$$

mit einen Grenzfaktor k multipliziert wird und nachher die Differenzen Diz mit dem Wert k · Md verglichen werden, wobei die Detektorelemente, für die

$$Diz<k · Md$$

gilt, als gut und die Detektorelemente, für die

$$Diz>k · Md$$

gilt, als schlecht betrachtet werden.

6. Wärmebildgerät nach Anspruch 5, dadurch gekennzeichnet, dass in der Ueberwachungsschaltung (UE) dem Fehlerdetektor (FD) ein Integrator (IN) nachgeschaltet ist, mit dessen Hilfe jedes Detektorelement N mal geprüft wird, bevor die Ueberwachungsschaltung (UE) definitiv weitermeldet, ob dieses Detektorelement defect ist oder nicht.

7. Wärmebildgerät nach Anspruch 6, dadurch gekennzeichnet, dass im Integrator (IN) ein digitaler Spitzenwertdetektor (DF, G2, KP) vorhanden ist.

**Revendications**

1. Appareil de production d'images thermiques avec un système optique de balayage (AO) et un détecteur (DT) comportant des éléments détecteurs disposés au moins approximativement en lignes et en colonnes et avec au moins un totalisateur (SM) de même qu'un circuit à portes logiques (TR) et avec un circuit de surveillance (UE) qui contrôle les valeurs des signaux émis par les éléments détecteurs et reconnaît une valeur fausse possible d'un signal provenant d'un élément détecteur défectueux, après quoi les portes logiques associées du circuit à portes logiques (TR) sont bloquées afin d'éliminer les signaux faux provenant des éléments détecteurs, caractérisé par le fait que le totalisateur (SM) comporte plusieurs éléments à retard pour émettre un signal de sortie de la forme S1 (t)+S2 (t—T1)+S3 (t—T2)+ ..., que le circuit à portes logiques (TR) est inséré entre les éléments détecteurs du détecteur (DT) et les entrées du totalisateur (SM), et qu'entre le totalisateur (SM) et un dispositif d'évaluation (VG, NW, DA, M) monté en aval est inséré un circuit de correction (KS) qui corrige, pour ce qui concerne les éléments détecteurs défectueux, le résultat du totalisateur (SM) en fonction de l'information fournie par le circuit de surveillance (UE).

2. Appareil de production d'images thermiques selon la revendication 1, caractérisé par le fait qu'entre le détecteur (DT) et le totalisateur (SM) sont insérés un circuit de multiplexage (MS) et un circuit convertisseur analogique/numérique (ADS), à l'aide duquel sont imbriqués ou codés les signaux des détecteurs.

3. Appareil de production d'images thermiques selon la revendication 1 ou 2, caractérisé par le fait que le circuit de correction (KS) est réalisé de telle façon par le totalisateur (SM) ou par un amplificateur qui lui est monté en aval, que l'amplification du totalisateur (SM) ou de l'amplificateur qui lui est monté en aval, est augmentée approximativement d'au moins un facteur $n/(n-n'')$, relation dans laquelle $n''$ est le nombre des signaux faux des éléments détecteurs et n est le nombre total des signaux des éléments détecteurs qui sont associés au totalisateur.

4. Appareil de production d'images thermiques selon la revendication 1 ou 2, caractérisé par le fait que le circuit de correction (KS) est réalisé de telle façon par le totalisateur (SM) ou par un amplificateur qui lui est monté en aval, que l'entrée d'un additionneur qui est contenue dans le totalisateur (SM) et qui est reliée à un élément détecteur défectueux, est isolée et est branchée en parallèle avec le canal d'un élément détecteur voisin fonctionnant correctement.

5. Appareil de production d'images thermiques selon l'une des revendications 1 à 4, caractérisé par le fait que le circuit de surveillance (UE) comporte un détecteur d'erreurs (FD) dans lequel sont d'abord formés les montants des différences

$$Diz = |aiz - \Sigma aiz/n| \quad i=1, 2, \ldots n$$

entre les valeurs des signaux aiz des n éléments détecteurs de chaque ligne et la valeur moyenne de ces valeurs de signaux, la valeur moyenne Md de ces montants

$$Md = \Sigma Diz/n$$

étant multipliée par un facteur limite k et les différences Diz étant ensuite comparées avec la valeur k.Md, les éléments détecteurs pour lesquels est valable la relation

$$Diz < k.Md$$

étant considérées comme étant bons, et les éléments détecteurs pour lesquels est valable la relation

$$Diz > k.Md$$

éant considérés comme mauvais.

6. Appareil de production d'images thermiques selon la revendication 5, caractérisé par le fait que dans le circuit de surveillance (UE) on prévoit, en aval du détecteur d'erreurs (FD), un intégrateur (IN) à l'aide duquel chaque élément détecteur est contrôlé N fois avant que le circuit de surveillance (UE) signale de façon définitive si cet élément détecteur est défectueux ou non.

7. Appareil de production d'images thermiques selon la revendication 6, caractérisé par le fait que dans l'intégrateur (IN) est prévu un détecteur numérique de valeur de pointe (DF, G2, KP).

## Claims

1. Thermal imaging apparatus having optical scanning means (AO) and a detector (DT) with detector elements which are at least approximately arranged in rows and columns, and having at least one summer (SM) and a gate circuit (TR), and having a monitoring circuit (UE) which checks the values of the signals emitted by the detector elements and recognises at least one possible incorrect value of a signal from a defective detector element, whereupon the assigned gates of the gate circuit (TR) are blocked in order to eliminate the incorrect detector element signals, characterised in that the summer (SM) has a plurality of delay elements in order to emit an output signal of the form S1 (t)+S2 (t—T1)+S3 (t—T2)+ ..., and that the gate circuit (TR) is inserted between the detector elements of the detector (DT) and the inputs of the summer (SM), and that between the summer (SM) and a following evaluating device (VG, NW, DA, M), there is inserted a correcting circuit (KS) which corrects the result of the summer (SM) in dependence upon the information about the defective detector elements supplied by the monitoring circuit (UE).

2. Thermal imaging apparatus as claimed in claim 1, characterised in that between the detector (DT) and the summer (SM) are inserted a multiplex circuit (MS) and an analogue-/digital-transducer circuit (ADS), with whose aid the detector signals are interlaced timewise or coded, as the case may be.

3. Thermal imaging apparatus as claimed in claim 1 or 2, characterised in that the correcting circuit (KS) is controlled by the summer (SM) or an amplifier connected following said summer, in such a manner that the amplification of the summer (SM) or of the amplifier connected following said summer, is at least approximately increased by a factor $n/(n-n'')$, $n''$ being the number of the incorrect, and n the total number of the detector element signals assigned to the summer.

4. Thermal imaging apparatus as claimed in claim 1 or 2, characterised in that the correcting circuit (KS) is controlled by the summer (SM) or an amplifier connected following said summer, in such a manner that the input, which is connected to a defective detector element, of an adding unit included in the summer (SM) is separated and connected in parallel to the channel of an adjacent, correctly functioning detector element.

5. Thermal imaging apparatus as claimed in one of claims 1 to 4, characterised in that the monitoring circuit (UE) has an error detector (FD), wherein the amounts of the difference

$$Diz = |a_{iz} - \Sigma a_{iz}/n| \quad i = 1, 2, \ldots n$$

are firstly formed between the signal values $a_{iz}$ from the n detector elements of each row and the mean value of these signal values, where the mean value Md of these amounts

$$Md = \Sigma Diz/n$$

is then multiplied with a limit factor k and the differences Diz are subsequently compared with the value $k \cdot Md$, where the detector elements, for which we have

$$Diz < k \; Md$$

are considered good and the detector elements, for which we have

$$Diz > k \; Md$$

are considered bad.

6. Thermal imaging apparatus as claimed in claim 5, characterised in that in the monitoring circuit (UE), the error detector (FD) is followed by an integrator (IN), with whose aid each detector element is checked N times before the monitoring circuit (UE) finally reports whether this detector element is defective or not.

7. Thermal imaging apparatus as claimed in claim 6, characterised in that a digital peak value detector (DF, G2, KP) is included in the integrator (IN).

FIG.1

FIG.2

FIG.3

FIG.4

FIG.5

FIG.6

FIG.7

FIG .8

FIG. 9

FIG.10

FIG. 11